**Europäisches Patentamt**

**European Patent Office**

**Office européen des brevets**

(19)

(11) Numéro de publication: **0 030 169**
**B1**

(12)

# FASCICULE DE BREVET EUROPEEN

(45) Date de publication du fascicule du brevet:
08.12.82

(51) Int. Cl.³: **F 16 H 7/12**

(21) Numéro de dépôt: 80401515.4

(22) Date de dépôt: 24.10.80

(54) **Dispositif et procédé de mise en tension d'un lien de transmission sans fin.**

(30) Priorité: 28.11.79 FR 7929253

(43) Date de publication de la demande:
10.06.81 Bulletin 81/23

(45) Mention de la délivrance du brevet:
08.12.82 Bulletin 82/49

(84) Etats contractants désignés:
DE GB IT

(56) Documents cités:
FR-A-1 581 626
US-A-1 374 643
US-A-3 081 643

(73) Titulaire: **AUTOMOBILES PEUGEOT, 75, avenue de la Grande Armée, F-75116 Paris (FR)**
Titulaire: **SOCIETE ANONYME AUTOMOBILES CITROEN, 117 à 167, Quai André Citroen, F-75747 Paris Cedex 15 (FR)**

(72) Inventeur: **Laine, Gabriel, 2, Allée de Savoie, F-78570 Andresy (FR)**

(74) Mandataire: **Moncheny, Michel, c/o Cabinet Lavoix 2 Place d'Estienne d'Orves, F-75441 Paris Cedex 09 (FR)**

## Dispositif et procédé de mise en tension d'un lien de transmission sans fin

L'invention concerne principalement un dispositif permettant d'établir une tension prédéterminée dans un lien de transmission sans fin, tel qu'une courroie ou une chaîne, au moment de son montage.

On connaît déjà de nombreux dispositifs de ce genre dans lesquels une poulie ou un pignon de renvoi sont portés par une platine mobile par rapport à un bâti, le déplacement de la platine produisant la mise en tension du lien de transmission sans fin.

Dans certains de ces dispositifs, c'est la force d'un ressort qui est retransmise au lien de transmission pour assurer sa mise en tension. Il est souvent difficile de mettre ces dispositifs en place ou de monter le lien de transmission sans outil spécial, par suite de la nécessité de comprimer le ressort.

Dans d'autres dispositifs, la mise en tension est effectuée par déplacement relatif d'un système vis-écrou au moyen d'une clé dynamométrique. L'application d'un effort de tension correct dépend alors de la bonne qualité d'exécution du travail.

La présente invention a pour but de fournir un dispositif de mise en tension d'une courroie ou d'une chaîne qui soit particulièrement simple, qui constitue un sous-ensemble complet facile à monter sur un bâti sans qu'il soit nécessaire de comprimer un ressort, qui permette la mise en place aisée de la courroie ou de la chaîne et pour lequel le transfert sur là courroie ou la chaîne de l'effort d'un ressort s'effectue facilement sans utilisation de système à vis et écrou trop tributaire de l'opérateur.

L'invention concerne donc un dispositif de mise en tension d'un lien de transmission sans fin, comprenant une platine portant un galet tendeur, un ressort de mise en tension disposé entre la platine et un boîtier destiné à être fixé sur un bâti, et des moyens de guidage et de fixation entre la platine et le bâti.

Ce dispositif est caractérisé en ce que la platine comporte une butée d'appui pour ledit boîtier, et les moyens de guidage et de fixation de la platine sur le bâti sont associés à une came permettant de déplacer la platine par rapport au boîtier, à l'encontre de l'action du ressort de mise en tension.

Dans une forme pratique de réalisation; ladite butée d'appui du boîtier est constituée par le galet tendeur.

L'invention a également pour objet un procédé de mise en tension d'un lien sans fin, caractérisé en ce qu'on réalise un sous-ensemble comprenant une platine portant un galet tendeur, un boîtier et un ressort agissant entre une butée de la platine et le boîtier et sollicitant ce dernier vers le galet, contre une butée d'appui portée par la platine, on met en place le sous-ensemble sur un support par engagement de trois lumières de la platine et deux orifices de fixation du boîtier, sur trois goujons du support, on place sur celui des goujons qui ne coopère pas avec le boîtier un loquet formant came et l'on amène ce loquet dans une position pour laquelle le ressort est bandé, on met en place le lien sur le galet, on ramène le loquet dans une position libérant le ressort et l'on fixe le sous-ensemble sur son support.

Un exemple de réalisation de l'invention appliquée à la mise en tension d'une courroie de transmission fait l'objet de la description qui suit, en référence aux dessins joints dans lesquels:

— la Fig. 1 est une vue d'ensemble du dispositif avant son montage;

— la Fig. 2 est une coupe suivant la ligne 2-2 de la Fig. 1;

— les Fig. 3 et 4 sont des vues identiques à celles des Fig. 1 et 2, le dispositif étant en place sur son bâti;

— les Fig. 5 et 6 sont des vues identiques aux deux précédentes, le dispositif étant prêt à recevoir la courroie de transmission;

— les Fig. 7 et 8 sont des vues identiques aux deux précédentes, le dispositif étant en service.

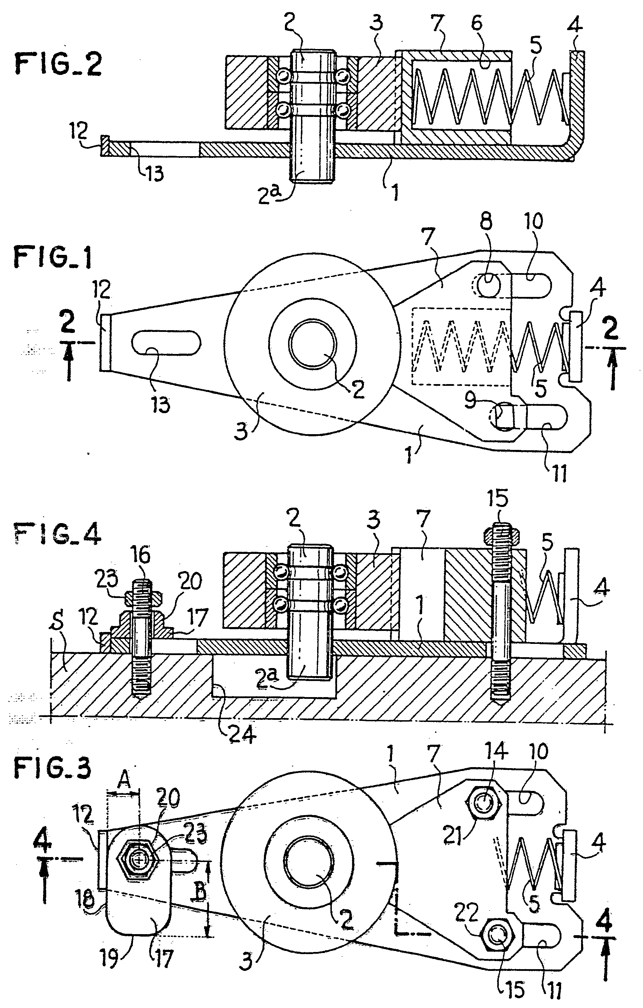

Le dispositif représenté sur les Fig. 1 et 2 comprend une platine 1 portant sur sa face avant un axe 2 sur lequel tourillonne un galet 3. A une extrémité de la platine 1, une patte 4, pliée à angle droit, sert d'appui pour un ressort hélicoïdal 5. Ce dernier s'engage dans un logement cylindrique 6 ménagé dans un boîtier 7 qui s'appuie sur le galet 3. Le boîtier 7 comporte deux trous de fixation 8, 9 qui coïncident avec des lumières 10, 11 formées dans la platine 1.

A l'autre extrémité de la platine 1 est soudé un taquet 12 qui se trouve face à une troisième lumière 13 formée dans la platine 1 entre le logement de l'axe 2 et le taquet 12. Ce dernier est en saillie par rapport à la platine 1, sur la face avant de cette dernière où se trouvent déjà situés l'axe 2 et la patte 4. Les lumières 10, 11 et 13 ont toutes trois une forme oblongue et s'étendent parallèlement les unes aux autres et à la direction d'action du ressort 5, tandis que la patte 4 et le taquet 12 sont perpendiculaires à cette direction.

Le dispositif ainsi décrit constitue un sous ensemble parfaitement stable, donc facile à manipuler. Il se monte aisément sur un bâti S (Fig. 4) par engagement des lumières 10, 11 et 13 sur des goujons 14, 15, 16 de guidage et de fixation. Les goujons 14, 15 s'engagent en même temps dans les trous de fixation 8, 9 do boîtier 7.

Sur le goujon 16 s'engage un loquet 17 dont le pourtour, formant came, comporte un bord 18 situé à une distance A de son axe et un bord 19 situé, par rapport à son axe, à une distance B > A. Sur le loquet est soudé un six-pans 20 permettant sa manoeuvre à l'aide d'une clé standard.

L'ensemble peut être bloqué sur le bâti 5 au moyen d'écrous 21, 22, 23 vissés sur les goujons 14, 15, 16. Le bâti S comporte un évidement 24 destiné à recevoir l'extrémité 2ª de l'axe 2 qui fait saillie sur la face arrière plane de la platine.

L'utilisation du dispositif décrit est la suivante:

Comme on l'a déjà dit, le sous-ensemble représenté aux Fig. 1 et 2 se monte facilement sur le bâti, sans aucun outil. On met ensuite en place, toujours sans outil, le loquet 17 dans le sens pour lequel son bord 18 est face au taquet 12 (Fig. 3), ainsi que les écrous 21, 22, 23 sans bien entendu les serrer.

A l'aide d'une clé standard engagée sur le six-pans 20, on fait tourner le loquet 17 pour amener son bord 19 face au taquet 12 (Fig. 5, 6). Ce mouvement déplace l'ensemble platine 1, galet 3 vers la gauche en regardant les Fig. 5 et 6 en comprimant le ressort 5, le boîtier 7 étant immobilisé par les goujons 14, 15.

Dans cette position, il est facile de faire passer une courroie 25 autour du galet 3.

Il suffit alors de ramener le loquet 17 dans sa position initiale pour que la tension du ressort 5 se reporte sur la courroie 25 et il ne reste plus qu'à bloquer les écrous 21, 22, 23 pour immobiliser le tout (Fig. 7 et 8).

Les objectifs recherchés sont donc bien atteints puisque:

— la mise en place du dispositif sur son support s'effectue sans qu'il soit nécessaire de comprimer le ressort au moment du montage, et sans outil particulier;

— la compression du ressort est réalisée simplement, au moyen d'une came que l'on peut actionner par un outil classique;

— la mise en place de la courroie ou de la chaîne sur l'organe de renvoi tendeur ne pose aucun problème, de même que la libération du ressort qui s'effectue par déplacement de la came précitée;

— la force de tension soulue est appliquée sans utilisation d'une clé dynamométrique;

— on ajoutera que le dispositif est néanmoins très simple et d'un prix de revient très raisonnable.

## Revendications

1. Dispositif de mise en tension d'un lien de transmission sans fin (25), comprenant une platine (1) portant un galet tendeur (3), un ressort (5) de mise en tension disposé entre la platine (1) et un boîtier (7) destiné à être fixé sur un bâti (S), et des moyens de guidage et de fixation prévus entre la platine et le bâti, caractérisé en ce que la platine (1) comporte une butée (3) d'appui pour ledit boîtier (7) et les moyens de guidage et de fixation de la platine sur le bâti (S) sont associés à une came (17) permettant de déplacer la platine (1) par rapport au boîtier (7), à l'encontre de l'action du ressort (5) de mise en tension.

2. Dispositif suivant la revendication 1, caractérisé en ce que ladite butée d'appui du boîtier (7) est constituée par le galet tendeur (3).

3. Dispositif suivant l'une quelconque des revendications 1 et 2, caractérisé en ce que la platine (1) comporte, en saillie sur une face avant, un axe (2) supportant le galet tendeur (3), et deux butées (4, 12) à peu près parallèles entre elles et disposées de part et d'autre du galet (3), l'une (4) de ces butées coopérant avec le ressort (5) et l'autre avec la came (17).

4. Dispositif suivant l'une quelconque des revendications 1 à 3, caractérisé en ce que les moyens de guidage et de fixation comprennent au moins trois lumières (10, 11, 13) de forme oblongue, orientées parallèlement à la direction d'action du ressort et destinées à coopérer avec trois goujons (14, 15, 16) portés par le support (S) sur lequel le dispositif doit être fixé.

5. Dispositif suivant les revendications 3 et 4, caractérisé en ce que les butées (4, 12) sont orientées perpendiculairement à la direction des lumières (10, 11, 13).

6. Dispositif suivant la revendication 4, caractérisé en ce que deux (10, 11) des lumières sont disposées au voisinage du boîtier (7), lui-même placé entre le galet tendeur (3) ou autre butée d'appui et le ressort (5), la troisième lumière (13) étant placée au voisinage de la butée (12) coopérant avec la came (17).

7. Dispositif suivant la revendication 6, caractérisé en ce que le boîtier (7) comporte deux orifices de fixation (8, 9) disposés en regard des deux lumières voisines (10, 11).

8. Dispositif suivant les revendications 4 et 6, caractérisé en ce que la came (17) est un loquet mis en place sur le goujon (16) coopérant avec la troisième lumière (13).

9. Procédé de mise en tension d'un lien sans fin au moyen d'un dispositif suivant l'une quelconque des revendications précédentes, caractérisé en ce qu'on réalise un sous-ensemble comprenant une platine (1) portant un galet tendeur (3), un boîtier (7) et un ressort (5) agissant entre une butée (4) de la platine et le boîtier (7) et sollicitant ce dernier vers le galet (3), contre une butée d'appui portée par la platine, on met en place le sous-ensemble sur un support (S), par engagement de trois lumières (10, 11, 13) de la platine, et deux orifices (8, 9) de fixation du boîtier (7), sur trois goujons (14, 15, 16) du support, on place sur celui des goujons qui ne coopère pas avec le boîtier un loquet (17) formant came et l'on amène ce loquet dans une position pour laquelle le ressort (5) est bandé, on met en place le lien de transmission (25) sur le galet (3), on ramène le loquet (17) dans une position libérant le ressort et l'on fixe le sous-ensemble sur son support.

## Patentansprüche

1. Vorrichtung zum Spannen eines endlosen Treibriemens (25), mit einer eine Spannrolle (3) tragenden Platte (1), mit einer zwischen der Platte (1) und einem an einem Gestell (S) zu befestigenden Gehäuse (7) angeordneten

**FIG_2**

**FIG_1**

**FIG_4**

**FIG_3**